# EUROPEAN PATENT APPLICATION

(11) **EP 4 601 049 A1**
(43) Date of publication of application: **13.08.2025**
(21) Application number: 23901158.8
(22) Date of filing: 08.12.2023
(51) Int. Cl.: H01M 4/66, H01M 10/052

(54) **NEGATIVE-ELECTRODE CURRENT COLLECTOR AND METHOD FOR MANUFACTURING SAME**

(30) Priority: 09.12.2022 KR 20220171829
(71) Applicant: LG Energy Solution, Ltd., Seoul 07335 (KR)
(72) Inventor: MOON, Jae Won, Daejeon 34122 (KR); YU, Hyung Kyun, Daejeon 34122 (KR)
(74) Representative: Hoffmann Eitle
(86) International application number: PCT/KR2023/020219
(87) International publication number: WO 2024/123141

(57) **Abstract**

A negative electrode current collector according to the present invention includes a copper thin film on which peaks and valleys are formed, and metal particles which are disposed in at least a portion of the valleys, have a higher standard reduction potential than a lithium ion, and are capable of forming a solid solution with lithium (Li).

## Description

### TECHNICAL FIELD

The present invention relates to a negative electrode current collector and a preparation method thereof.

### BACKGROUND ART

Demand for batteries as an energy source has been significantly increased as technology development and demand with respect to electric vehicles and energy storage systems (ESS) have increased, and researches on batteries capable of meeting various needs have been carried out accordingly. Particularly, as a power source for such devices, research into lithium secondary batteries having excellent lifetime and cycle characteristics as well as high energy density has been actively conducted.

In general, a lithium secondary battery includes a positive electrode, a negative electrode, a separator disposed between the positive electrode and the negative electrode, and an electrolyte. The negative electrode may have a structure in which a negative electrode active material layer is stacked on one surface or both surfaces of a negative electrode current collector, and a copper thin film is mainly used as the negative electrode current collector.

A lithium metal battery is a battery using an electrochemical reaction in which, by using lithium metal as a negative electrode active material, lithium metal of a negative electrode loses electrons and moves to a positive electrode through an electrolyte during discharge of the battery and lithium ions move to the negative electrode through the electrolyte during charge of the battery to be stored in the negative electrode active material. The lithium metal battery is advantageous in that it theoretically has very high energy capacity in comparison to a commercial lithium ion battery which uses graphite or the like as a negative electrode active material.

However, in a case in which a lithium metal battery using a copper thin film, as a negative electrode current collector, is charged and discharged, a flux of lithium ions is concentrated around defects (terraces, kinks, and/or steps) contained in the copper thin film, and, accordingly, lithium nucleation and dendrite growth non-uniformly occur. For example, in a case in which a copper thin film is used as a negative electrode current collector in a lithium metal battery, lithium dendrites grow randomly on a surface of the copper thin film during charge and discharge, and, since the lithium dendrites penetrate a separator, there is a problem in that a short circuit occurs between a positive electrode and a negative electrode.

Thus, there is a need to develop a technique to suppress the random growth of the lithium dendrites on the negative electrode current collector in the lithium metal battery.

### DISCLOSURE OF THE INVENTION

### TECHNICAL PROBLEM

An aspect of the present invention provides a negative electrode current collector that may suppress random growth of lithium dendrites on the negative electrode current collector and a preparation method thereof.

### TECHNICAL SOLUTION

According to an embodiment of the present invention, there is provided a negative electrode current collector including a copper thin film on which peaks and valleys are formed; and metal particles which are disposed in at least a portion of the valleys, have a higher standard reduction potential than a lithium ion, and are capable of forming a solid solution with lithium (Li).

The metal particle may be silver (Ag).

A size of the metal particle may be in a range of 0.1 nm to 1,000 nm.

The metal particle may be a hydrophilic particle.

The at least a portion of the valleys according to the present invention may include a hydrophilic group.

At least a portion of the peaks according to the present invention may include a hydrophobic group. In this case, the at least a portion of the peaks may include at least one of silane, polyvinylidene fluoride (PVDF), and polytetrafluoroethylene (PTFE).

The copper thin film according to the present invention may be an electrolytic copper foil or a rolled copper foil.

The negative electrode current collector according to the present invention may have a thickness of 4 µm to 20 µm, or may have a center line surface roughness Ra of 0.1 µm to 0.5 µm.

According to another embodiment of the present invention, there is provided a method of preparing a negative electrode current collector which includes steps of preparing a copper thin film on which peaks and valleys are formed, and disposing metal particles capable of forming a solid solution with lithium (Li) in at least a portion of the valleys.

The disposing of the metal particles capable of forming a solid solution with lithium (Li) in the at least a portion of the valleys may include steps of hydrophobically treating at least a portion of the peaks, and coating the copper thin film with metal particles having hydrophilicity. In this case, the hydrophobically treating of the at least a portion of the peaks may include coating a surface of the copper thin film with at least one of silane, polyvinylidene fluoride (PVDF), and polytetrafluoroethylene (PTFE).

In the method of preparing a negative electrode current collector of the present invention, the copper thin film may be prepared by an electrolytic plating process.

According to another embodiment of the present invention, there is provided a lithium secondary battery which includes a negative electrode including the above-described negative electrode current collector, a positive electrode, and a separator disposed between the negative electrode and the positive electrode.

### ADVANTAGEOUS EFFECTS

The present invention is characterized in that it provides a negative electrode current collector in which metal particles with a higher standard reduction potential than a lithium ion are disposed in valleys that are formed on a copper thin film. The metal particle may act as a seed that induces a uniform lithium distribution on the negative electrode current collector during charge and discharge of a battery. Specifically, the metal particle acts as a heterogeneous nucleation site by forming a solid solution with lithium before the lithium electrodeposited on the negative electrode current collector forms a Li⁰ phase (pure Li phase). As a result, the metal particle may reduce interface energy of the negative electrode current collector, and may prevent dendritic development of the lithium electrodeposited on the negative electrode current collector and induce uniform lithium deposition by controlling crystal nucleation, which becomes a beginning of lithium dendrite growth during charge and discharge of the battery, to an appropriate level. In addition, a problem, in which a short circuit between a positive electrode and a negative electrode occurs due to penetration of a separator by lithium dendrites, may be prevented by suppressing random growth of the lithium dendrites on a surface of the copper thin film.

Since a method of preparing a negative electrode current collector according to the present invention does not undergo artificial photolithography or a dry or chemical etching process, the method may simplify a process procedure and may reduce manufacturing costs.

Also, the method of preparing a negative electrode current collector according to the present invention has high utilization because both electrolytic copper foil and rolled copper foil may be used as the copper thin film included in the negative electrode current collector.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIG. 1 is a cross-sectional view of a negative electrode current collector according to the present invention.
FIG. 2 is a phase equilibrium diagram of lithium and copper.
FIG. 3 is a phase equilibrium diagram of lithium and silver.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

In this specification, the description of "A and/or B" means A, or B, or A and B.

In this specification, the expression "%" denotes wt% unless explicitly stated otherwise.

### <Negative Electrode Current Collector>

A negative electrode current collector according to the present invention includes a copper thin film on which peaks and valleys are formed, and metal particles which are disposed in at least a portion of the valleys, have a higher standard reduction potential than a lithium ion, and are capable of forming a solid solution with lithium (Li).

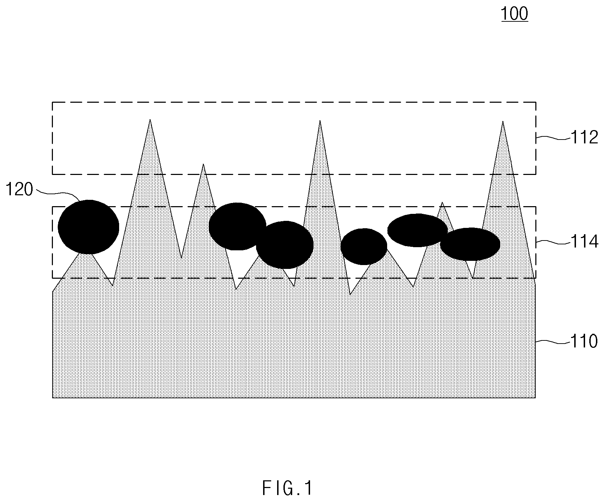

Hereinafter, the negative electrode current collector of the present invention will be described in more detail with reference to FIG. 1.

FIG. 1 is a cross-sectional view of a negative electrode current collector 100 according to the present invention. The negative electrode current collector 100 of the present invention has conductivity without causing chemical changes in the battery. As illustrated in FIG. 1, the negative electrode current collector 100 includes a copper thin film 110 and metal particles 120.

The copper thin film 110 may be an electrolytic copper foil or a rolled copper foil. Specifically, the copper thin film 110 may be an electrolytic copper foil which is prepared by an electrolytic plating process. The copper thin film 110 includes peaks 112 and valleys 114. Specifically, the copper thin film 110 includes defects, and the peaks 112 and the valleys 114 may be formed on a surface of the copper thin film 110.

The peak 112 refers to a region that protrudes relative to the valley 114 on the surface of the copper thin film 110. At least a portion of the peaks 112 may include a hydrophobic group. Specifically, the at least a portion of the peaks 112 may include an oil-based binder, and may more specifically include at least one of silane, polyvinylidene fluoride (PVDF), and polytetrafluoroethylene (PTFE). The peaks 112 including the hydrophobic materials listed above may have hydrophobicity.

The valley 114 refers to a valley region that is recessed relative to the peak 112 on the surface of the copper thin film 110. Since the copper thin film 110 of the present invention, as an electrolytic copper foil, has hydrophilicity, the valley 114 may relatively have hydrophilicity in a case in which the peak 112 is coated with the hydrophobic material.

The metal particle 120 may be disposed in at least a portion of the valleys 114. Specifically, the metal particle 120 may be in physical contact with copper located in the valley 114, or may form an alloy with the copper located in the valley 114.

The metal particle 120 may act as a seed that induces a uniform lithium distribution on the negative electrode current collector 100 during charge and discharge of the battery. Specifically, the metal particle 120 acts as a heterogeneous nucleation site by forming a solid solution with lithium before the lithium electrodeposited on the negative electrode current collector 100 forms a Li⁰ phase (pure Li phase) .

The metal particle 120 may have a higher standard reduction potential than a lithium ion in order to form the solid solution with the lithium electrodeposited on the negative electrode current collector 100. Specifically, the metal particle 120 may be silver (Ag).

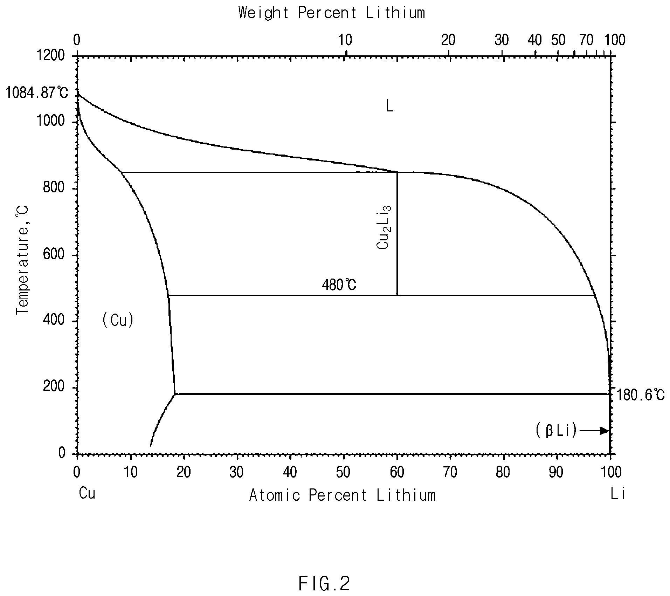

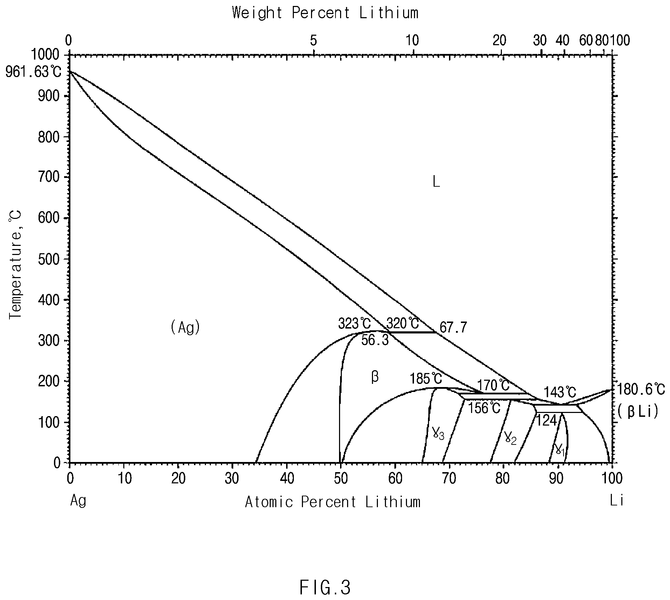

FIG. 2 is a phase equilibrium diagram of lithium and copper (Cu), and FIG. 3 is a phase equilibrium diagram of lithium and silver (Ag). As illustrated in FIG. 2, copper included in the copper thin film 110 forms a solid solution with lithium only under conditions of a relatively very low lithium content. Thus, in a case in which a copper thin film not including the metal particle 120 of the present invention is used as a negative electrode current collector, random growth of dendrites due to lithium electrodeposited on the negative electrode current collector may not be suppressed. In contrast, as illustrated in FIG. 3, since a silver particle used as the metal particle 120 may form a solid solution with lithium even under conditions of a relatively high lithium content (for example, 40 to 50 atm%), it may suppress random growth of lithium dendrites by interfering with the dendritic development of the lithium electrodeposited on the negative electrode current collector and may induce uniform lithium deposition on the negative electrode current collector.

A size of the metal particle 120 may be in a range of 0.1 nm to 1,000 nm, particularly 0.1 nm to 500 nm, and more particularly 0.5 nm to 100 nm. In this case, the size of the metal particle 120 may be measured by an image analysis method using a field emission-scanning electron microscope (FE-SEM) by Hitachi High-Tech Corporation. In a case in which the size of the metal particle 120 satisfies the above numerical range, the metal particles may exist in a dispersed state in a solution before being disposed on the copper thin film 110, and may be easily disposed in the valleys 114 having a size of a few µm without a separate adhesive component when disposed on the copper thin film 110.

A thickness of the negative electrode current collector 100 may be in a range of 4 µm to 20 µm, particularly 5 µm to 15 µm, and more particularly 6 µm to 12 µm. In a case in which the thickness of the negative electrode current collector satisfies the above numerical range, mechanical properties of the negative electrode current collector may be secured while manufacturing cost of a battery prepared from the negative electrode current collector may be reduced and energy density may be improved.

Center line surface roughness Ra of the negative electrode current collector 100 may be in a range of 0.1 µm to 0.5 µm, particularly 0.2 µm to 0.5 µm, and more particularly 0.3 µm to 0.5 µm. In a case in which the center line surface roughness Ra of the negative electrode current collector 100 satisfies the above numerical range, since the peaks 112 and the valleys 114 are formed on the surface of the copper thin film 110 that is prepared by an electrolytic plating method, the metal particle 120 may be easily disposed in the valley 114.

### <Method of Preparing Negative Electrode Current Collector>

Next, a method of preparing a negative electrode current collector according to the present invention will be described.

The method of preparing a negative electrode current collector according to the present invention includes steps of preparing a copper thin film on which peaks and valleys are formed, and disposing metal particles capable of forming a solid solution with lithium (Li) in at least a portion of the valleys. In this case, the negative electrode current collector prepared by the above method may be the above-described negative electrode current collector of the present invention.

Hereinafter, each step of the method of preparing a negative electrode current collector according to the present invention will be described in more detail.

### (1) Step of Preparing Copper Thin Film on Which Peaks and Valleys Are Formed

The method of preparing a negative electrode current collector according to the present invention begins with a step of preparing a copper thin film on which peaks and valleys are formed.

Specifically, the copper thin film may be prepared by an electrolytic plating process. The electrolytic plating process is advantageous in terms of process flexibility and cost because it is easy to control a thickness of a plating foil by adjusting an applied current magnitude, current application time, temperature, etc. Also, since a copper thin film with a thin thickness may be achieved if the electrolytic plating process is used, energy density of the battery may be improved.

For example, a method of preparing a copper thin film by an electrolytic plating method is as follows. First, a reaction tank equipped with a cathode rotating drum and an anode plate disposed to face the cathode rotating drum is prepared, and the reaction tank is filled with an electrolyte solution in which copper ions and water are mixed. Next, copper is electrodeposited on a surface of the cathode rotating drum by rotating the cathode rotating drum in a state in which electricity is applied to the cathode rotating drum and the anode plate. Finally, the copper thin film may be finally prepared by continuously withdrawing the electrodeposited copper from the reaction tank. Since the copper thin film prepared as described above includes defects, peaks and valleys may be formed on a surface of the copper thin film.

### (2) Step of Disposing Metal Particles in at Least a Portion of the Valleys

Next, metal particles having a higher standard reduction potential than a lithium ion and capable of forming a solid solution with lithium (Li) are disposed in at least a portion of the valleys.

Specifically, the disposing of the metal particles capable of forming a solid solution with lithium (Li) in the at least a portion of the valleys may include steps of hydrophobically treating at least a portion of the peaks, and coating the copper thin film with metal particles having hydrophilicity.

The hydrophobically treating of the at least a portion of the peaks may be a step of disposing a hydrophobic material on the peaks. For example, the hydrophobic material may be disposed on the peaks by applying a liquid containing the hydrophobic material to the surface of the copper thin film using a roller and then drying it. In this case, since the liquid containing the hydrophobic material does not penetrate into the valley having a size of a few µm, the hydrophobic material is not disposed in the valley. The hydrophobic material may include an oil-based binder, and may specifically include at least one of silane, polyvinylidene fluoride (PVDF), and polytetrafluoroethylene (PTFE).

The coating of the copper thin film with the metal particles having hydrophilicity may be a step of applying a solution containing metal particles to the surface of the copper thin film, on which the at least a portion of the peaks has been hydrophobically treated, by a spraying method and/or a dipping method. In this case, the metal particles may be disposed in at least a portion of the valleys while avoiding the peaks having hydrophobicity.

Thereafter, a solvent in the colloidal solution coated/applied on the surface of the copper thin film may be removed by drying the copper thin film at 40°C to 50°C.

Since the method of preparing a negative electrode current collector according to the present invention does not undergo artificial photolithography or a dry or chemical etching process, the method may simplify a process procedure and may reduce manufacturing costs.

### <Lithium Secondary Battery>

A lithium secondary battery of the present invention may include a negative electrode, a positive electrode, a separator, and an electrolyte. In this case, the negative electrode includes the above-described negative electrode current collector of the present invention.

The negative electrode according to the present invention may not include a negative electrode active material layer that is disposed on the negative electrode current collector. In this case, the lithium secondary battery including the negative electrode may be an anodeless battery. For example, when the lithium secondary battery of the present invention is charged, lithium metal is formed on the surface of the negative electrode current collector, and the lithium metal may act as a negative electrode active material.

The lithium secondary battery of the present invention may induce uniform lithium deposition on the negative electrode current collector and may prevent a problem, in which a short circuit between the positive electrode and the negative electrode occurs due to penetration of the separator by lithium dendrites, by preventing dendritic development of lithium electrodeposited on the negative electrode current collector and suppressing random growth of the lithium dendrites on the surface of the negative electrode current collector.

The positive electrode includes a positive electrode current collector. Also, the positive electrode may include a positive electrode active material layer that is formed on the positive electrode current collector.

The positive electrode current collector is not particularly limited as long as it has conductivity without causing chemical changes in the battery. For example, stainless steel, aluminum, nickel, titanium, fired carbon, or aluminum or stainless steel that is surface-treated with one of carbon, nickel, titanium, or silver may be used as the current collector.

The positive electrode current collector may have a thickness of 3 µm to 500 µm, and may have fine surface roughness to increase adhesion to the positive electrode active material layer. For example, the positive electrode current collector may be used in various shapes such as a film, a sheet, a foil, a net, a porous body, a foam body, a non-woven fabric body, and the like.

The positive electrode active material layer may include a positive electrode active material, and may further include a conductive agent and a binder, if necessary.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li (NiₚCo_{q}Mnᵣ)O₂ (where 0<p<1, 0<q<1, 0<r<1, and p+q+r=1) or Li (Niₚ₁Co_{q1}Mnᵣ₁)O₄ (where 0<p1<2, 0<q1<2, 0<r1<2, and p1+q1+r1=2), etc.), lithium-nickel-cobalt-transition metal (M) oxide (e.g., Li (Niₚ₂Co_{q2}Mnᵣ₂M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r2, and s2 are atomic fractions of each independent elements, wherein 0<p2<1, 0<q2<1, 0<r2<1, 0<S2<1, and p2+q2+r2+S2=1), etc.), or lithium iron phosphate (e.g., Li₁₊ₐFe₁₋ₓMₓ(PO_{4-b})X_{b} (where M is at least one selected from Al, Mg, and Ti, X is at least one selected from fluorine (F), sulfur (S), and nitrogen (N), and -0.5≤a≤0.5, 0≤x≤0.5, and 0≤b≤0.1), and any one thereof or a mixture of two or more thereof may be included.

Among these materials, in terms of the improvement of capacity characteristics and stability of the battery, the lithium metal oxide may be LiCoO₂, LiMnO₂, LiNiO₂, lithium nickel manganese cobalt oxide (e.g., Li(Ni_{1/3}Mn_{1/3}Co_{1/3})O₂, Li (Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, Li(Ni_{0.8}Mn_{0.1}Co_{0.1})O₂), etc.), lithium nickel cobalt aluminum oxide (e.g., LiNi_{0.8}Co_{0.15}Al_{0.05}O₂, etc.), lithium nickel manganese cobalt aluminum oxide (e.g., Li(Ni_{0.86}Co_{0.05}Mn_{0.07}Al_{0.02})O₂), or lithium iron phosphate (e.g., LiFePO₄), and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on a total weight of the positive electrode active material layer.

The positive electrode conductive agent is a component for further improving conductivity of the positive electrode active material, wherein the conductive agent is not particularly limited as long as it has conductivity without causing chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The positive electrode conductive agent may commonly be included in an amount of 1 wt% to 20 wt%, preferably 1 wt% to 15 wt%, and more preferably 1 wt% to 10 wt% based on the total weight of the positive electrode active material layer.

The positive electrode binder is a component that assists in the binding between the active material and the conductive agent and in the binding with the current collector.

Examples of the binder may be polyvinylidene fluoride, polyvinyl alcohol, carboxymethyl cellulose (CMC), starch, hydroxypropylcellulose, regenerated cellulose, polyvinylpyrrolidone, polyethylene (PE), polypropylene, an ethylene-propylene-diene monomer, a sulfonated ethylene-propylene-diene monomer, a styrene-butadiene rubber, a fluoro rubber, or various copolymers.

The positive electrode binder may commonly be included in an amount of 1 wt% to 20 wt%, preferably 1 wt% to 15 wt%, and more preferably 1 wt% to 10 wt% based on the total weight of the positive electrode active material layer.

The separator may be disposed between the negative electrode and the positive electrode. Any separator may be used as the separator without particular limitation as long as it is typically used in a lithium secondary battery, and particularly, a separator having high moisture-retention ability for an electrolyte solution as well as low resistance to the transfer of electrolyte ions is preferable.

For example, a porous polymer film containing a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used as the separator.

A lithium secondary battery according to an embodiment of the present invention may include an electrolyte. In this case, the electrolyte may be a non-aqueous electrolyte. The non-aqueous electrolyte may include an organic solvent and a lithium salt which are commonly used in the art, but is not particularly limited.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an etherbased solvent such as dibutyl ether or tetrahydrofuran; a ketone-based solvent such as cyclohexanone; an aromatic hydrocarbon-based solvent such as benzene and fluorobenzene; or a carbonate-based solvent, such as dimethyl carbonate (DMC), diethyl carbonate (DEC), methylethyl carbonate (MEC), ethylmethyl carbonate (EMC), ethylene carbonate (EC), and propylene carbonate (PC), may be used as the organic solvent.

Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a lowviscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. It is desirable that the lithium salt is included at a concentration of about 0.6 mol% to about 2 mol% in the electrolyte.

Although not essential, the non-aqueous electrolyte according to the present invention may additionally include additives in order to further improve physical properties of the secondary battery.

Examples of the additives may be at least one selected from the group consisting of a cyclic carbonate-based compound, a halogen-substituted carbonate-based compound, a nitrile-based compound, a sultone-based compound, a sulfate-based compound, a phosphate-based compound, a borate-based compound, a benzene-based compound, an amine-based compound, a silane-based compound, and a lithium salt-based compound.

The cyclic carbonate-based compound, for example, may be vinylene carbonate (VC) or vinyl ethylene carbonate (VEC).

The halogen-substituted carbonate-based compound, for example, may be fluoroethylene carbonate (FEC).

The nitrile-based compound, for example, may be succinonitrile, adiponitrile, hexanetricyanide, or 1,4-dicyano-2-butene.

The sultone-based compound, for example, may be 1,3-propane sultone or 1,3-propene sultone.

The sulfate-based compound, for example, may be ethylene sulfate (Esa), trimethylene sulfate (TMS), or methyl trimethylene sulfate (MTMS).

The phosphate-based compound, for example, may be at least one compound selected from the group consisting of lithium difluoro (bisoxalato)phosphate, lithium difluorophosphate, tetramethyl trimethyl silyl phosphate, trimethyl silyl phosphite, tris(2,2,2-trifluoroethyl) phosphate, and tris(trifluoroethyl)phosphite.

The borate-based compound, for example, may be tetraphenylborate or lithium oxalyl difluoroborate (LiODFB).

The benzene-based compound, for example, may be fluorobenzene, the amine-based compound may be triethanolamine or ethylenediamine, and the silane-based compound may be tetravinylsilane.

The lithium salt-based compound is a compound different from the lithium salt included in the non-aqueous electrolyte solution, wherein the lithium salt-based compound may be at least one compound selected from the group consisting of LiPO₂F₂, LiODFB, LiBOB (lithium bisoxalatoborate (LiB(C₂O₄)₂), and LiBF₄.

The additives may be used alone, or in a mixture of two or more thereof.

A total amount of the additives may be in a range of 1 wt% to 20 wt%, preferably, 1 wt% to 15 wt% based on a total weight of the electrolyte solution. In a case in which the additives are included within the above range, occurrence of a side reaction during an initial activation process of the secondary battery or remaining or precipitation of the additives may be prevented while a film may be stably formed on the electrode and an ignition phenomenon during overcharge may be suppressed.

The lithium secondary battery of the present invention may be prepared by putting an electrode assembly, which is formed by disposing the separator between the positive electrode and the negative electrode, in a battery case, injecting the electrolyte, and then sealing the battery case. Also, the lithium secondary battery may be prepared by stacking the electrode assembly, impregnating it with the electrolyte, putting the product thus obtained in a battery case, and sealing the battery case.

One commonly used in the art may be selected as the battery case, and a shape of the battery case depending on the use of the battery is not limited, for example, a cylindrical type, a prismatic type, a pouch type, or a coin type may be used, but the present invention is not limited thereto.

The lithium secondary battery according to the present invention may not only be used in a battery cell that is used as a power source of a small device, but may also be used as a unit cell in a medium and large sized battery module including a plurality of battery cells. Preferred examples of the medium and large sized device may be electric vehicles, hybrid electric vehicles, plug-in hybrid electric vehicles, and energy storage systems (ESS).

### Mode for carrying out the invention

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention, and such modifications and alterations fall within the scope of claims included herein.

### Examples and Comparative Examples

### Example

### (1) Preparation of Negative Electrode Current Collector

A reaction tank equipped with a cathode rotating drum and an anode plate disposed to face the cathode rotating drum was prepared, and the reaction tank was filled with an electrolyte solution in which copper sulfate and water were mixed. Next, copper was electrodeposited on a surface of the cathode rotating drum by rotating the cathode rotating drum in a state in which electricity was applied to the cathode rotating drum and the anode plate. Then, an 8 µm thick electrolytic copper foil was obtained by continuously withdrawing the electrodeposited copper from the reaction tank.

Next, after a surface of the electrolytic copper foil was coated with silane, colloidal silver was sprayed on the electrolytic copper foil to dispose silver particles on the surface of the electrolytic copper foil. Thereafter, a solvent remaining on the electrolytic copper foil was dried with hot air to prepare a negative electrode current collector.

### (2) Preparation of Lithium Secondary Battery

The negative electrode current collector, on which a separate negative electrode active material layer was not disposed, was used as a negative electrode.

LiCoO₂, polyvinylidene fluoride (PVdF), carbon nanotubes (CNT), and carbon black were added to an N-methylpyrrolidone (NMP) solvent at a weight ratio of 97.59:1.18:0.24:0.09 and stirred to prepare a positive electrode slurry. The positive electrode slurry was applied to one surface of a 10 µm thick aluminum thin film at a loading amount of 18.60 mg/cm² and then vacuum-dried. The dried positive electrode slurry was roll-pressed, dried in a vacuum oven at 130°C for 6 hours, and then punched to prepare a positive electrode.

An electrode assembly was prepared by assembling the negative electrode and positive electrode prepared as described above and a porous polyethylene separator (thickness: 12 µm) using a stacking method.

An electrolyte was prepared by dissolving LiPF₆ in a solvent (EC:PC:EP:PP = 20:10:25:45 mass ratio) such that a concentration of the LiPF₆ was 1.2 M.

A lithium secondary battery (anodeless battery) was prepared by accommodating the electrode assembly in a battery case, injecting the electrolyte, and then sealing the battery case.

### Comparative Example 1

A negative electrode current collector was prepared in the same manner as in the example except that a process of spraying colloidal silver on the electrolytic copper foil was not performed.

A lithium secondary battery was prepared in the same manner as in the example except that the negative electrode current collector prepared by the above method (i.e., the negative electrode current collector not including silver particles) was used during the preparation of the lithium secondary battery.

### Comparative Example 2

A negative electrode current collector was prepared in the same manner as in the example except that a process of coating the surface of the electrolytic copper foil with silane was not performed.

A lithium secondary battery was prepared in the same manner as in the example except that the negative electrode current collector prepared by the above method (i.e., the negative electrode current collector not including a hydrophobic coating layer) was used during the preparation of the lithium secondary battery.

### Experimental Example 1

When the lithium secondary batteries respectively prepared in Example and Comparative Examples 1 and 2 were charged and discharged at a temperature of 45°C, the number of charge and discharge cycles until a short circuit between the positive electrode and the negative electrode occurred was measured. Specifically, when fully charging and then fully discharging of the lithium secondary battery was defined as 1 cycle, the total number of cycles until the separator in the lithium secondary battery was pierced to cause a short circuit between the positive electrode and the negative electrode was measured and presented in Table 1 below.

**[Table 1]**

| | The number of charge/discharge cycles of the lithium secondary battery (times) |
|---|---|
| Example | 100 |
| Comparative Example 1 | 50 |
| Comparative Example 2 | 84 |

As illustrated in Table 1, with respect to the example in which the silver particles were included in valleys of the negative electrode current collector, it may be confirmed that the total number of cycles until the short circuit between the positive electrode and the negative electrode occurred was significantly higher than those of Comparative Example 1, in which silver particles were not included, and Comparative Example 2 which was coated with silver particles without a hydrophobic coating.

### <Description of the Symbols>

100: Negative Electrode Current Collector
110: Copper Thin Film
112: Peaks
114: Valleys
120: Metal Particle

## Claims

1. A negative electrode current collector comprising:
a copper thin film on which peaks and valleys are formed; and metal particles which are disposed in at least a portion of the valleys, have a higher standard reduction potential than a lithium ion, and are capable of forming a solid solution with lithium (Li).

2. The negative electrode current collector of claim 1, wherein the metal particle is silver (Ag).

3. The negative electrode current collector of claim 1, wherein a size of the metal particle is in a range of 0.1 nm to 1,000 nm.

4. The negative electrode current collector of claim 1, wherein the metal particle is a hydrophilic particle.

5. The negative electrode current collector of claim 1, wherein the at least a portion of the valleys comprises a hydrophilic group.

6. The negative electrode current collector of claim 1, wherein at least a portion of the peaks comprises a hydrophobic group.

7. The negative electrode current collector of claim 1, wherein at least a portion of the peaks comprises at least one of silane, polyvinylidene fluoride (PVDF), and polytetrafluoroethylene (PTFE).

8. The negative electrode current collector of claim 1, wherein the copper thin film is an electrolytic copper foil or a rolled copper foil.

9. The negative electrode current collector of claim 1, wherein a thickness of the negative electrode current collector is in a range of 4 µm to 20 µm.

10. The negative electrode current collector of claim 1, wherein center line surface roughness Ra of the negative electrode current collector is in a range of 0.1 µm to 0.5 µm.

11. A method of preparing a negative electrode current collector, the method comprising steps of:
preparing a copper thin film on which peaks and valleys are formed, and
disposing metal particles, which have a higher standard reduction potential than a lithium ion and are capable of forming a solid solution with lithium (Li), in at least a portion of the valleys.

12. The method of claim 11, wherein the disposing of the metal particles capable of forming a solid solution with lithium (Li) in the at least a portion of the valleys comprises steps of:
hydrophobically treating at least a portion of the peaks, and coating the copper thin film with metal particles having hydrophilicity.

13. The method of claim 12, wherein the hydrophobically treating of the at least a portion of the peaks comprises coating a surface of the copper thin film with at least one of silane, polyvinylidene fluoride (PVDF), and polytetrafluoroethylene (PTFE).

14. The method of claim 11, wherein the copper thin film is prepared by an electrolytic plating process.

15. A lithium secondary battery comprising:
a negative electrode including the negative electrode current collector of claim 1;
a positive electrode; and
a separator disposed between the negative electrode and the positive electrode.
